# DEMANDE DE BREVET EUROPEEN

(11) **EP 1 571 047 A1**
(43) Date de publication de la demande: **07.09.2005**
(21) Numéro de dépôt: 05300150.9
(22) Date de dépôt: 25.02.2005
(51) Int. Cl.: B60R 15/02

(54) **Réservoir de lavage à volume variable pour véhicule automobile**

(30) Priorité: 05.03.2004 FR 0402312; 05.03.2004 FR 0402315
(71) Demandeur: Peugeot Citroen Automobiles S.A., 78140 Vélizy Villacoublay (FR)
(72) Inventeur: Besson, Jack, 78200 Mantes la Jolie (FR)
(74) Mandataire: Fernandez, Francis Lionel

(57) **Abrégé**

Réservoir d'eau de lavage extractible pour véhicule automobile, comportant, montée dans un logement (8), une réserve principale (10) d'eau comprenant un carter rigide (11) et au moins une pompe électromagnétique (16) pour assurer la circulation de l'eau, cette réserve principale communiquant avec une réserve auxiliaire (21) à volume variable, réunie à une tubulure de distribution (17), caractérisé en ce que les deux réserves (10,21) sont supportées par un berceau extensible commun (25), propre à accommoder l'expansion ou la rétraction de la réserve auxiliaire (21) vis-à-vis de la réserve principale (10), ce berceau étant solidaire du fond (7) du logement (8) recevant le réservoir (5) par l'intermédiaire de moyens de fixation (35, 36) détachables, permettant de séparer le réservoir du logement.

## Description

La présente invention est relative à un réservoir d'eau de lavage, à volume variable, permettant de fournir à un utilisateur d'un véhicule automobile une réserve de liquide appropriée pour le lavage partiel ou complet de ce dernier, pour qu'il puisse le cas échéant se rafraîchir, ou bien pour assurer le nettoyage rapide d'accessoires divers selon ses besoins, notamment lorsque le véhicule est arrêté dans un endroit qui n'est pas à proximité directe d'une source d'eau de lavage, immédiatement disponible.

On sait que tous les véhicules automobiles sont équipés d'une réserve d'eau de volume relativement limité, destinée exclusivement au lavage des vitres du pare-brise avant et de la custode arrière, à partir d'une commande située au tableau de bord et actionnée par le conducteur lorsque celui-ci souhaite procéder, en route, à une projection d'eau sur la vitre et simultanément à un balayage de celle-ci par ses essuie-glace.

L'eau contenue dans la réserve est aspirée par une pompe électromagnétique et renvoyée sous pression convenable vers des buses de projection ou des gicleurs similaires qui délivrent l'eau sous forme de jets orientés et dispersés sur la vitre à nettoyer.

Mais le volume disponible de cette réserve d'eau est limitée par les dimensions du réservoir de lavage, généralement logé sous le capot dans un emplacement disponible à côté du moteur bien qu'il puisse aussi être placé en un autre endroit plus approprié, notamment dans le coffre du véhicule, de sorte que cette réserve n'est pas convenablement adaptée à d'autres usages. En particulier, elle n'est pas suffisante pour fournir une quantité propre à permettre le lavage de la carrosserie du véhicule, voire d'accessoires divers que l'utilisateur peut désirer nettoyer avant de les placer dans son coffre, tels par exemple qu'un vélo tout terrain, des bottes etc...

Pour cette opération en effet, l'utilisateur doit disposer d'une source d'eau indépendante auprès de laquelle le véhicule doit être stationné, pour permettre d'effectuer ce lavage à l'aide d'un jet ou d'une lance, raccordée à cette source d'eau qui la délivre sous pression.

La présente invention vise un perfectionnement apporté à un réservoir de lavage du genre ainsi défini, consistant à munir ce réservoir de moyens propres à le rendre extractible pour le placer hors du logement dans lequel il est disposé pour son utilisation, en particulier pour le sortir du coffre du véhicule et faciliter ainsi son remplissage à partir d'une source d'eau extérieure, avant qu'il ne soit remis en place pour assurer les fonctions qui lui sont dévolues.

A cet effet, le réservoir considéré, comportant, montée dans un logement prévu dans la carrosserie du véhicule, une réserve principale d'eau de lavage comprenant un carter rigide et au moins une pompe électromagnétique pour assurer la circulation de l'eau, cette réserve principale communiquant avec une réserve auxiliaire à volume variable, réunie à une tubulure de distribution, se caractérise en ce que les deux réserves sont supportées par un berceau extensible commun, propre à accommoder l'expansion ou la rétraction de la réserve auxiliaire vis-à-vis de la réserve principale, ce berceau étant solidarisé du réservoir par l'intermédiaire de moyens de fixation détachables, permettant de séparer ce réservoir du logement et de le transporter isolément, pour remplissage ou stockage, au gré d'un utilisateur.

Avantageusement, la pompe, prévue pour délivrer l'eau de lavage au lave-glace du pare-brise avant et/ou de la lunette arrière du véhicule, est alimentée par un câble électrique coopérant avec un enrouleur permettant d'accommoder l'extension de ce câble nécessaire à l'extraction du réservoir et à sa sortie du logement qui le reçoit.

Selon une caractéristique en elle-même déjà connue, la réserve auxiliaire est constituée par une enveloppe souple, plissée en accordéon et munie d'un flasque de fermeture comprenant une poignée de tirage pour autoriser l'expansion de son volume et partant, celui du réservoir.

Selon une autre caractéristique du réservoir conforme à l'invention, le berceau extensible comprend un ensemble télescopique constitué d'éléments gigognes, permettant sous l'effet d'un effort de traction latérale exercé sur la poignée de tirage de la réserve auxiliaire, d'accommoder l'extension du volume du réservoir.

De préférence, le berceau extensible comporte un jeu d'éléments coulissants, comprenant des bras latéraux se déplaçant parallèlement entre eux d'un élément à l'autre, ces bras latéraux étant munis à leurs extrémités de rebords latéraux formant butées de fin de course, de manière à ce que l'extension maximale du berceau corresponde à l'addition des longueurs des bras des éléments coulissants, d'une butée à la suivante, selon la succession de ces éléments.

Selon une autre caractéristique particulière, le berceau comporte des pions sphériques formant rotules en un matériau élastique, ménagés en relief sur la surface des éléments coulissants, ces pions étant aptes à coopérer avec des pièces de couplage où ils s'engagent à la manière de clips du fait de leur élasticité propre, ces pièces de couplage étant solidaires de la réserve auxiliaire du réservoir, de telle sorte qu'un effort d'extraction exercé perpendiculairement sur le berceau sépare celui-ci du réservoir, en le rendant apte à être extrait hors de son logement.

Avantageusement, le carter rigide de la réserve principale comporte une poignée de préhension pour produire l'effort d'extraction.

L'invention concerne également divers perfectionnements complémentaires apportés à un tel réservoir de lavage extractible embarqué sur le véhicule automobile, pour permettre en particulier de procéder directement, non seulement à l'opération classique de lavage de la vitre du pare-brise avant et de celle de la custode arrière, mais également, en tout lieu, au lavage d'accessoires divers, voire du véhicule lui-même, total ou localisé en cas de salissures sur une zone limitée de la carrosserie, sans nécessiter l'usage d'une installation extérieure qui n'est généralement pas disponible à tout moment, ceci en utilisant la pompe qui est associée à ce réservoir pour délivrer l'eau de lavage des vitres.

Ainsi et selon encore d'autres particularités de l'invention, le réservoir extractible comportant toujours une réserve d'eau principale et une pompe électromagnétique pour fournir cette eau sous pression aux gicleurs des lave-glaces du pare-brise avant et/ou de la custode arrière d'un véhicule automobile, se caractérise également en ce que cette réserve principale communique avec une réserve d'eau auxiliaire, à volume variable, la pompe étant adaptée à distribuer aussi cette eau sous pression à une douchette de lavage indépendante.

Grâce à ces perfectionnements complémentaires, la réserve auxiliaire peut être repliée contre la réserve principale en position de non utilisation, à l'intérieur de son carter rigide d'où elle peut être extraite latéralement afin d'accroître le volume global du réservoir, celui-ci pouvant toujours être sorti en totalité de son logement dans le coffre pour l'amener à l'extérieur du véhicule et le remplir le cas échéant d'eau de lavage, permettant ainsi de l'utiliser de façon plus commode pour satisfaire aux divers besoins de nettoyage déjà mentionnés, avant de le remettre en place à l'intérieur du coffre après son utilisation.

Le réservoir selon l'invention est disposé dans un espace libre de la carrosserie, de préférence à l'intérieur d'un capot de protection logé dans et communiquant avec le coffre du véhicule, au dessus de l'emplacement d'une des roues arrière de celui-ci. Selon le cas, le réservoir peut ou non être fixé temporairement à la carrosserie du véhicule par des moyens de liaison équipés d'amortisseurs aux chocs, du genre « silent-blocs ».

De préférence également, l'enveloppe extensible de la réserve auxiliaire comporte une plaque de tête rigide, munie d'une poignée de tirage permettant d'exercer sur le soufflet une traction réalisant un accroissement de son volume vers l'intérieur du coffre.

Dans ce but, le capot de protection comporte une trappe d'accès à la poignée de tirage qui réalise l'extension du soufflet.

Selon une autre caractéristique, le réservoir comporte un bouchon de fermeture amovible pour le remplissage avec de l'eau des réserves principale et auxiliaire communicantes.

Avantageusement, la pompe électromagnétique est logée dans la réserve principale et comporte deux sorties, respectivement vers les gicleurs des lave-glaces et vers une tuyauterie souple reliée à la douchette de lavage indépendante et permettant de la déplacer librement au dessus et au voisinage de la zone à nettoyer.

Selon encore une autre caractéristique avantageuse, la trappe d'accès au capot de protection comporte, à l'intérieur de ce capot, un support de réception et de stockage de la douchette.

Utilement, le réservoir selon l'invention est muni d'un capteur de niveau de l'eau dans les réserves principale et auxiliaire communicantes, et le cas échéant, d'une résistance de chauffage, mises sous tension par une commande indépendante, prévue de préférence sur le tableau de bord du véhicule.

D'autres caractéristiques d'un réservoir de lavage extractible pour véhicule automobile, établi conformément à l'invention, apparaîtront encore à travers la description qui suit de plusieurs exemples de réalisation, donnés à titre indicatif et non limitatif, en référence aux dessins annexés sur lesquels :
- La Figure 1 est un schéma illustrant une fraction du coffre d'un véhicule automobile dans lequel est monté un réservoir extractible selon l'invention.
- La Figure 2 est une vue en coupe transversale, à plus grande échelle, du réservoir extractible, disposé dans son logement à l'intérieur du coffre.
- La Figure 3 est un schéma illustrant, vu de dessus, le berceau extensible supportant le réservoir.
- Les Figures 4 et 5 sont des vues respectivement en perspective et de face du réservoir et de son berceau extractible.
- La Figure 6 est une vue schématique d'une variante de réalisation, illustrant en vue perspective partielle le coffre arrière d'un véhicule automobile, représenté ouvert et contenant un réservoir de lavage établi conformément à cette variante.
- La Figure 7 est une vue en coupe transversale, à plus grande échelle, du réservoir de lavage selon la variante de la Figure 6.
- La Figure 8 est une vue de face du réservoir illustré sur la Figure 7.

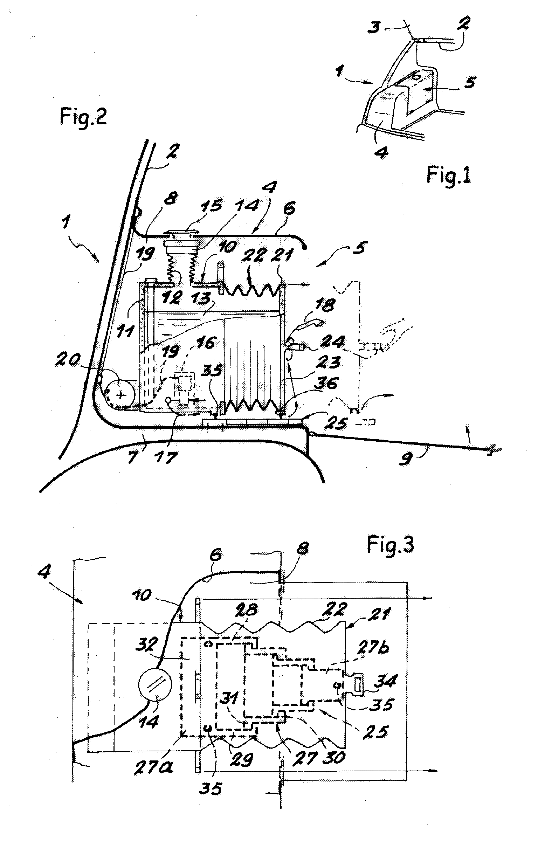

Sur la Figure 1, la référence 1 désigne une fraction de la carrosserie d'un véhicule automobile, notamment du coffre arrière de celui-ci, représenté ouvert, le capot 3 qui ferme normalement le coffre étant schématiquement représenté en position relevée.

A l'intérieur du coffre 2, est prévu un élément de recouvrement 4 de la roue arrière (non représentée) du véhicule, cet élément de recouvrement étant aménagé de manière à permettre de disposer dans celui-ci, à l'intérieur du coffre, un réservoir extractible 5 d'eau de lavage conforme à l'invention, décrit plus en détail en référence aux Figures 2 à 5.

Sur les Figures 2 à 4, on retrouve le coffre 2 de la carrosserie 1 et l'élément de recouvrement 4, lequel comporte essentiellement une tôle supérieure 6, s'étendant sensiblement parallèlement au fond horizontal 7 du coffre, cette tôle et ce fond délimitant ensemble un logement 8 pour le montage du réservoir 5, convenablement replié sur lui-même, l'accès au réservoir s'effectuant après basculement d'une trappe latérale 9, articulée sur le bord du fond 7 et fermant ce logement 8 lorsque le réservoir 5 n'est pas utilisé.

Le réservoir 5 est constitué, d'une manière en elle-même déjà connue, par une réserve principale 10 comprenant un carter rigide 11, communiquant avec une tubulure d'alimentation 12 permettant de remplir cette réserve avec un volume approprié d'eau de lavage 13.

La tubulure 12 est avantageusement munie d'un embout d'extrémité 14, coopérant avec un bouchon 15 prévu dans la tôle supérieure 6 de l'élément de recouvrement 4, pour assurer éventuellement le remplissage du réservoir, l'embout 14 pouvant être automatiquement séparé du bouchon 15 lorsque le réservoir 5 est prévu pour être extrait du réservoir 8 et, au-delà sorti du coffre 2, de la manière décrite plus loin.

Dans la réserve principale 10 est montée au moins une pompe électromagnétique 16, apte à venir aspirer l'eau contenue dans celle-ci et à la refouler par une tuyauterie 17 à une douchette 18 montée à son extrémité opposée, à l'extérieur du réservoir 5.

L'alimentation électrique de la pompe est réalisée par un câble 19, monté sur un enrouleur 20 disposé dans le logement 8, cet enrouleur permettant une extension convenable et suffisante du câble lorsque le réservoir 5 est extrait du logement 8 et au-delà du coffre 2 du véhicule.

On peut également envisager que la pompe 16 délivre l'eau de lavage 13 aux gicleurs des lave glace du pare-brise avant et de la lunette arrière, indépendamment de l'alimentation de la douchette 18.

La réserve principale 10 communique avec une réserve auxiliaire 21, comprenant une paroi extérieure 22 plissée en accordéon et fermée du côté opposé par un flasque en forme de plaque d'obturation 23, munie d'une poignée de tirage 24, permettant de faire varier le volume de cette réserve auxiliaire et par suite la quantité d'eau de lavage 13 contenue dans les deux réserves communicantes.

Conformément à l'invention, le réservoir 5 ainsi formé par les deux réserves communicantes 10 et 21, est porté à l'intérieur du logement 8 par un berceau de support extensible 25, commun aux deux réserves et disposé horizontalement sur le fond plan 7 de ce logement, ce berceau étant conçu, non seulement pour permettre de tirer l'ensemble du réservoir à l'extérieur du logement, mais également pour autoriser ensuite sa séparation vis-à-vis de ce berceau afin que le réservoir 5 puisse être entièrement extrait du coffre 2 et le cas échéant être utilisé de façon indépendante, à l'extérieur du véhicule.

Avantageusement, cette extraction s'effectue au moyen d'une poignée 26, prévue à la partie supérieure du carter rigide 11 de la réserve principale 10, par laquelle l'utilisateur peut exercer un effort de soulèvement dans une direction verticale, sensiblement perpendiculaire au plan du berceau 25. Des poignées complémentaires 26a peuvent également être prévues latéralement sur le carter 11 pour faciliter la préhension du réservoir au cours de cette opération d'extraction.

La structure particulière du berceau de support 25 apparaît plus en détail sur les Figures 3 à 5, ce berceau étant notamment formé de plusieurs éléments gigognes 27, coulissant mutuellement et propres à s'emboîter l'un dans l'autre lorsque le berceau est replié sur lui-même, dans le cas en particulier où le volume de la réserve auxiliaire 21 est minimal, ces éléments se dépliant respectivement de l'un à l'autre pour accroître la dimension en longueur correspondante du berceau 25, quand le volume de la réserve 21 est à l'inverse maximal.

Notamment, chaque élément coulissant 27 comporte des bras latéraux parallèles 28 et 29, munis à leurs extrémités de rebords latéraux tels que 30 et 31, respectivement dirigés en sens inverse l'un de l'autre d'un élément au suivant, de manière à venir en butée mutuelle lors de l'extension maximale du berceau 25.

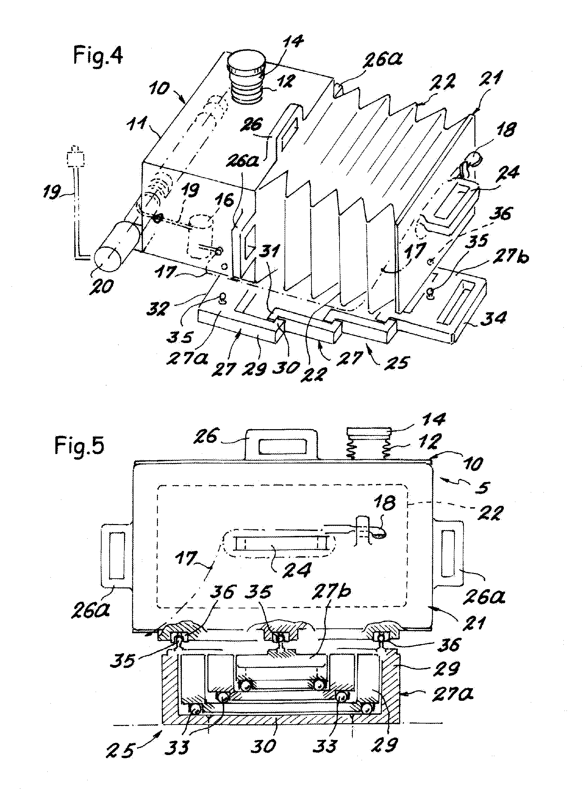

L'élément 27 du berceau 25, situé au plus près de la réserve principale 10, désigné sous la référence 27a sur la Figure 4, comporte entre ses deux bras 29, une traverse 32 qui s'étend sous le carter rigide 11 de cette réserve, cet élément présentant sensiblement, vu en coupe comme illustré sur la Figure 5, une section droite en U à l'intérieur de laquelle sont montés les autres éléments coulissants 27 du berceau de support 25.

Les débattements relatifs de ces divers éléments les uns par rapport aux autres lors de l'extension ou de la rétraction du berceau, sont avantageusement facilités par des billes de roulement 33, montées sous chaque élément 27 au droit de ses bras 29 et en appui, d'un élément à l'autre, sur celui qui se trouve en dessous dans le berceau.

L'élément 27b du berceau 25 situé à l'opposé de l'élément 27a, est conformé pour réaliser une poignée complémentaire 34, permettant de réaliser l'extension du berceau de support 25 suite à un effort provoqué sur ce dernier dans le sens correspondant, conjointement avec celui exercé par la poignée 24 sur la réserve auxiliaire 21 se déployant avec le berceau grâce à sa paroi souple 22, pliée en accordéon.

Selon l'invention, on prévoit une liaison amovible entre le réservoir 5 formé par les deux réserves accolées et communicantes 10 et 21 et son berceau de support 25, cette liaison étant réalisée au moyen de pions 35 de forme générale sphérique, en un matériau présentant une relative élasticité, par exemple en caoutchouc durci ou similaire, prévus en relief sur le dessus du berceau 35, ces pions coopérant à la façon de rotules avec des pièces de couplage 36 portées par la partie inférieure du réservoir 5 et dans lesquelles ils s'engagent en réalisant une liaison par clip, pour assurer ainsi une liaison satisfaisante entre le réservoir et le berceau, sans empêcher leur séparation, en cas d'effort d'extraction suffisant exercé sur ce réservoir au moyen des poignées 26 et 26a.

Lorsque l'utilisateur souhaite se servir du réservoir d'eau de lavage, il peut ainsi, après ouverture de la trappe 9, accéder à l'intérieur du logement 8 et consécutivement à un effort de traction convenable exercé sur le berceau de support 25, dans le sens de son extension, provoquer la sortie de ce réservoir hors du logement.

Lors de ce déplacement, le câble d'alimentation 19 de la pompe électromagnétique 16 est fourni sur une longueur suffisante à partir de l'enrouleur 20 pour accommoder le mouvement d'extension du berceau.

Le remplissage du réservoir 5 peut alors être complété si nécessaire grâce à l'extension possible de la réserve auxiliaire 21, l'utilisateur pouvant ensuite se servir de la douchette 18 d'une manière analogue à celle déjà prévue dans la demande antérieure précitée.

L'utilisateur peut également procéder, à partir de cette position du réservoir 5, à son extraction totale hors du coffre 2, en le séparant dans ce cas, de son berceau de support 25, notamment en désolidarisant les pions élastiques 35 de leurs pièces de couplage 36.

Le réservoir peut ainsi être extrait du coffre 2 et utilisé de façon plus commode à l'extérieur de celui-ci, avant d'être replacé sur son berceau, puis ramené à l'intérieur du logement 8 par rétraction du berceau, le câble 19 s'enroulant simultanément en sens inverse sur l'enrouleur 20.

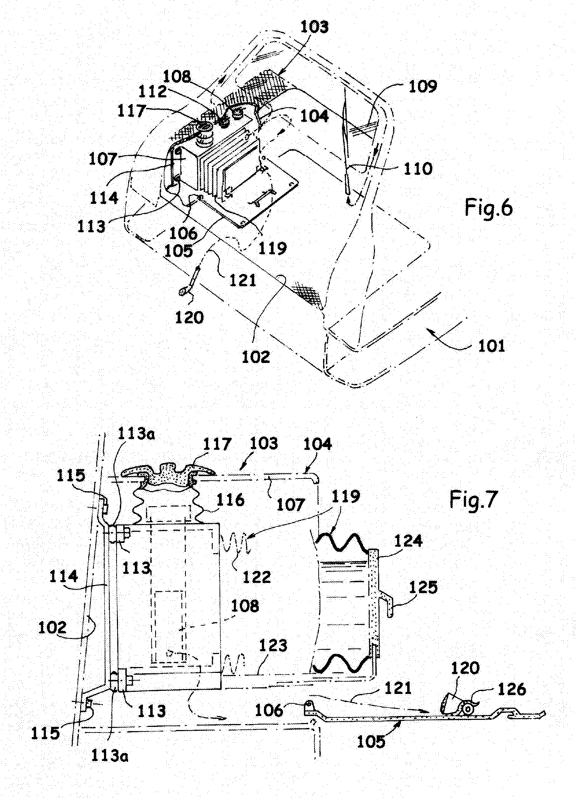

Les Figures 6 à 8 illustrent une variante de réalisation de l'invention où le réservoir extractible décrit ci-dessus comporte divers perfectionnements complémentaires, permettant d'accroître et d'améliorer ses possibilités d'utilisation.

Sur la Figure 6, la référence 101 désigne derechef la partie arrière de la carrosserie d'un véhicule automobile, représentée avec le coffre 102 de celle-ci ouvert, afin de laisser voir, de façon schématique, le réservoir de lavage selon l'invention, repéré dans son ensemble par la référence 103.

Ce réservoir 103 est disposé à l'intérieur et sur un des côtés latéraux du coffre 102, de préférence sous un élément de recouvrement comme un capot de protection 104, situé comme dans l'exemple des Figures 1 à 5, au dessus de l'emplacement d'une des roues arrière (non représentée) du véhicule.

Ce capot 104 comporte une trappe d'accès 105, qui peut être rabattue dans le coffre pour permettre l'extension du réservoir 103 dans celui-ci, comme exposé ci-après. Cette trappe 105 est à cet effet articulée sur le capot 104, autour de charnières de pivotement 106 ou d'articulations analogues.

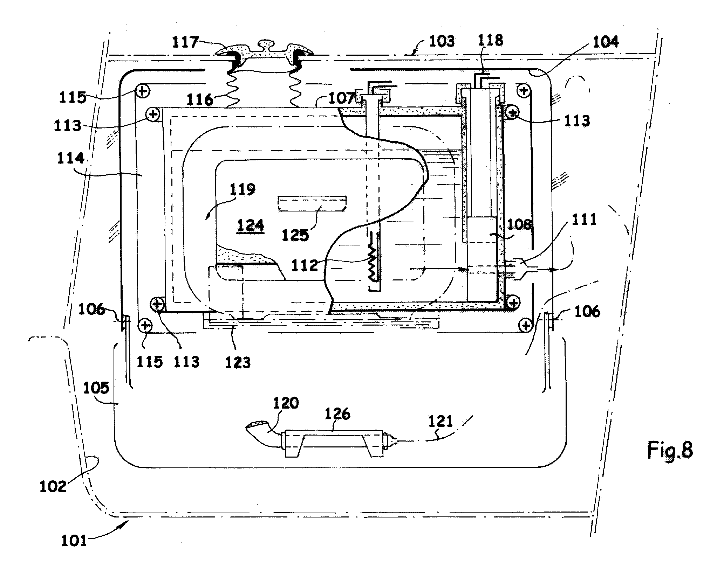

Comme mieux représenté sur les Figures 7 et 8, le réservoir 103 comporte une réserve principale 107, remplie d'eau et dans laquelle est logée une pompe électromagnétique 108, agencée pour aspirer l'eau dans cette réserve et la refouler sous une pression adéquate vers des buses ou gicleurs (non représentés), propres à la distribuer au voisinage des vitres du pare brise avant du véhicule ou de sa custode arrière 109 (Figure 6), au dessus du coffre 102, pour permettre à un essuie-glace classique 110, schématisé sur la Figure 6, de balayer cette vitre pour en assurer le nettoyage.

Sur la Figure 8, apparaît la tubulure 111 dans laquelle débite la pompe 108, pour délivrer l'eau à ces gicleurs selon une disposition connue et d'ailleurs commune dans son principe à tous les véhicules automobiles. On voit également que la réserve principale 107, de préférence constituée par un carter rigide dont les dimensions sont adaptées à celles de l'emplacement disponible recevant le réservoir 103 sous le capot 104, comporte une jauge de niveau classique 112.

Cette réserve d'eau est extractible grâce à la mise en oeuvre des moyens déjà illustrés en relation avec la première variante envisagée précédemment, notamment en la montant sur un berceau coulissant télescopique, ces moyens déjà décrits n'étant pas relatés à nouveau ici, ni figurés sur les dessins pour ne pas surcharger ceux-ci ; cette réserve peut néanmoins être temporairement immobilisée à l'intérieur du coffre 102 par des écrous de blocage 13 qui la maintiennent appliquée, avantageusement par l'intermédiaire d'amortisseurs du genre « silent-blocs » 113a, contre une plaque de support 114, elle même solidarisée de la carrosserie par d'autres écrous 115, comme représenté sur la coupe de la Figure 7.

La réserve principale 107 est raccordée à une tuyauterie souple 116, sur laquelle s'adapte un bouchon amovible 117, pour permettre d'assurer le remplissage de cette réserve par l'eau qui servira au nettoyage des vitres, après refoulement vers ces dernières via la pompe 108, la tubulure 111 et les gicleurs de distribution.

Sur la Figure 8, on a également fait apparaître les connexions électriques 118 de la pompe 108, reliées à la batterie du véhicule, par l'intermédiaire d'un interrupteur de commande (non représenté), généralement placé au tableau de bord du véhicule et par lequel le conducteur actionne simultanément ses essuie-glaces.

Dans cette variante, la réserve principale 107 du réservoir d'eau est associée à une réserve auxiliaire 119, à volume variable, qui communique avec la précédente et qui va permettre de distribuer l'eau dont elle aura été remplie à une douchette de lavage indépendante 120, reliée à cette réserve auxiliaire par une tubulure ou un conduit souple de liaison 121, lequel est à son tour raccordé à la pompe électromagnétique 108, de telle sorte que l'eau du réservoir, à l'aide d'un commutateur (non représenté) intégré à la pompe mais directement commandé par le conducteur, puisse au choix alimenter sous pression, soit les essuie-glaces, soit cette douchette et, dans ce cas, permettre à l'utilisateur de nettoyer tout endroit de la carrosserie accessible par celle-ci, utiliser cette douchette pour se rafraîchir ou laver un quelconque accessoire extérieur.

La réserve auxiliaire 119 se présente sous la forme d'une enveloppe souple et extensible 122, en accordéon, portée par un berceau 123 coulissant vis-à-vis du carter de la réserve principale 107, permettant notamment d'exercer un effort de traction sur une plaque de tête rigide 124, montée en bout de l'enveloppe 122 et munie dans ce but d'une poignée de tirage 125, de manière à pouvoir augmenter le volume de cette réserve par extension de celle-ci à l'intérieur du coffre 102, la trappe d'accès 105 ayant été préalablement ouverte et rabattue autour de ses charnières de pivotement 106.

Une fois cette réserve auxiliaire 119 remplie d'eau à partir d'un poste d'alimentation quelconque par la tuyauterie 116, après retrait du bouchon 117, le niveau atteint étant contrôlé en permanence par la jauge 112 puisque les deux réserves 107 et 119 communiquent entre elles, le commutateur bascule la sortie de la pompe 108 sur le conduit souple 121 de liaison raccordé à la douchette 120, qui peut être saisie sur un support 126 porté à cet effet par le volet basculent de la trappe d'accès 106, cette douchette pouvant ensuite être librement déplacée au dessus de la zone de la carrosserie à nettoyer ou contre tout accessoire à laver par un jet d'eau sous pression.

On réalise ainsi un réservoir de lavage à volume variable, extractible, démontable et transportable, qui peut être facilement sorti du coffre du véhicule, puis remis en place dans celui-ci, après usage, ce réservoir pouvant simultanément comporter toutes les fonctionnalités de celui déjà décrit dans la demande antérieure, notamment pour l'alimentation des gicleurs des lave glace de ce véhicule.

De plus la réalisation d'un réservoir de lavage extensible permet de personnaliser aisément les besoins de chaque utilisateur, en permettant de faire varier au gré de celui-ci la contenance de ce réservoir en fonction seulement des limites imposées par les dimensions de l'espace disponible de réception de ce réservoir dans le coffre du véhicule notamment.

Bien entendu, il va par ailleurs de soi que l'invention ne se limite pas aux seuls exemples de réalisation plus spécialement décrits et représentés mais qu'elle en embrasse au contraire toutes les variantes.

Notamment, on pourrait remplacer le réservoir principal par deux réservoirs plus étroits, de préférence identiques mais pouvant contenir des liquides différents, disposés côte à côte sur le berceau mais utilisables séparément ou simultanément, ces réservoirs, munis chacun d'une tuyauterie et d'une douchette, pouvant être montées en série ou de préférence en parallèle. Dans ce cas, chaque réservoir devra bien entendu être associé à une pompe distincte.

De même, il peut être avantageux de disposer à l'intérieur du réservoir, de préférence dans le carter rigide de la réserve principale, une résistance chauffante pour éviter l'emploi d'antigel dans l'eau de l'une et le cas échéant de l'autre des deux réserves, cette résistance étant commandée ou non, manuellement ou automatiquement selon les desiderata de l'Utilisateur, en particulier à partir du tableau de bord du véhicule.

## Revendications

1. Réservoir d'eau de lavage extractible pour véhicule automobile, comportant, montée dans un logement (8) prévu dans la carrosserie de ce véhicule, une réserve principale (10) d'eau de lavage comprenant un carter rigide (11) et au moins une pompe électromagnétique (16) pour assurer la circulation de l'eau, cette réserve principale communiquant avec une réserve auxiliaire (21) à volume variable, réunie à une tubulure de distribution (17), **caractérisé en ce que** les deux réserves (10,21) sont supportées par un berceau extensible commun (25), propre à accommoder l'expansion ou la rétraction de la réserve auxiliaire (21) vis-à-vis de la réserve principale (10), ce berceau étant solidarisé du réservoir (5) par l'intermédiaire de moyens de fixation (35, 36), détachables, permettant de séparer le réservoir du logement et de le transporter isolément, pour remplissage ou stockage, au gré d'un utilisateur.

2. Réservoir extractible selon la revendication 1, **caractérisé en ce que** la pompe (16) est alimentée par un câble électrique (19) coopérant avec un enrouleur (20) permettant d'accommoder l'extension de ce câble nécessaire à l'extraction du réservoir (5) et à sa sortie du logement (8) qui le reçoit.

3. Réservoir extractible selon l'une des revendications 1 ou 2, **caractérisé en ce que** la réserve auxiliaire (21) est constituée par une enveloppe souple (22), plissée en accordéon et munie d'un flasque (23) de fermeture comprenant une poignée de tirage (24) pour autoriser l'expansion de son volume.

4. Réservoir extractible selon l'une quelconque des revendications 1 à 3, **caractérisé en ce que** le berceau extensible (25) comprend un ensemble télescopique constitué d'éléments gigognes (27), permettant d'accommoder l'accroissement du volume du réservoir (5).

5. Réservoir extractible selon l'une quelconque des revendications 1 à 4, **caractérisé en ce que** le berceau extensible (25) comporte un jeu d'éléments coulissants (27), comprenant des bras latéraux (28,29) se déplaçant parallèlement entre eux d'un élément à l'autre, ces bras latéraux étant munis à leurs extrémités de rebords latéraux (30, 31) formant butées de fin de course, de manière à ce que l'extension maximale du berceau (25) corresponde à l'addition des longueurs des bras des éléments coulissants, d'une butée à la suivante, selon la succession des éléments.

6. Réservoir extractible la revendication 5, **caractérisé en ce que** les déplacements relatifs des éléments coulissants (27) sont assurés par des billes de roulement (33), logées entre ces éléments.0

7. Réservoir extractible selon l'une quelconque des revendications 1 à 6, **caractérisé en ce que** le berceau de support (25) comporte des pions sphériques (35) formant rotules, en un matériau élastique, ménagés en relief sur la surface des éléments coulissants (27), ces pions étant aptes à coopérer avec des pièces de couplage (36) où ils s'engagent à la manière de clips du fait de leur élasticité propre, ces pièces de couplage étant solidaires du réservoir (5), de telle sorte que l'effort d'extraction exercé perpendiculairement sur le berceau (25) sépare celui-ci du réservoir en le rendant extractible.

8. Réservoir extractible selon l'une quelconque des revendications 1 à 7, **caractérisé en ce que** le carter rigide (11) de la réserve principale (10) comporte au moins une poignée de préhension (26) pour produire l'effort d'extraction.

9. Réservoir extractible selon l'une quelconque des revendications 1 à 8, comportant une réserve d'eau de lavage principale (107) et une pompe électromagnétique (108) pour fournir cette eau sous pression aux gicleurs des lave-glaces du pare-brise avant et/ou de la custode arrière (109) d'un véhicule automobile, **caractérisé en ce que** cette réserve principale (107) communique avec une réserve d'eau auxiliaire (119), à volume variable, la pompe (108) étant adaptée à également distribuer cette eau sous pression à une douchette de lavage indépendante (120).

10. Réservoir selon l'une quelconque des revendications 1 à 9, **caractérisée en ce qu'**il est disposé dans un espace libre de la carrosserie du véhicule, notamment dans le coffre (2 - 102) de celui-ci, préférence à l'intérieur d'un élément de recouvrement du type capot de protection (4 - 104) logé dans et communiquant avec le coffre au dessus de l'emplacement d'une des roues arrière de celui-ci.

11. Réservoir selon la revendications 9, **caractérisée en ce qu'**il est temporairement fixé à la carrosserie du véhicule par des moyens de liaison (113) équipés d'amortisseurs aux chocs (113a), du genre « silent-blocs ».

12. Réservoir selon l'une des revendications 9 à 11, **caractérisée en ce que** l'enveloppe extensible (122) de la réserve auxiliaire (119) comporte une plaque de tête rigide (124), munie d'une poignée de tirage (125) permettant d'exercer sur le soufflet une traction réalisant un accroissement de son volume vers l'intérieur du coffre (2 - 102).

13. Réservoir selon la revendication 12, **caractérisée en ce que** le capot de protection (104) comporte une trappe d'accès (105) à la poignée de tirage (125) qui réalise l'extension du soufflet.

14. Réservoir selon l'une quelconque des revendications 9 à 13, **caractérisée en ce qu'**il comporte un bouchon de fermeture amovible (117) pour le remplissage avec de l'eau des réserves principale (107) et auxiliaire (119) communicantes.

15. Réservoir selon l'une quelconque des revendications 9 à 14, **caractérisée en ce que** la pompe électromagnétique (108) est logée dans la réserve principale (107) et comporte deux sorties, respectivement vers les gicleurs des lave-glaces et vers une tuyauterie souple (121) reliée à la douchette de lavage indépendante (120).

16. Réservoir selon l'une quelconque des revendications 13 à 15, **caractérisée en ce que** la trappe d'accès (105) au capot de protection (104) comporte à l'intérieur de ce capot, un support (126) de réception et de stockage de la douchette.

17. Réservoir selon l'une quelconque des revendications 9 à 16, **caractérisée en ce qu'**il est muni d'un capteur de niveau (112) de l'eau dans les réserves principale (107) et auxiliaire (119) communicantes, et le cas échéant d'une résistance de chauffage.
